# EUROPÄISCHE PATENTSCHRIFT

(11) **EP 0 574 682 B1**
(45) Veröffentlichungstag und Bekanntmachung des Hinweises auf die Patenterteilung: **22.01.1997**
(21) Anmeldenummer: 93107036.1
(22) Anmeldetag: 30.04.1993
(51) Int. Cl.: F16D 1/09, B23B 31/30

(54) **Kupplung zum reibschlüssigen Verbinden einer Welle mit einem Maschinenteil**
A coupling for frictional attachment of a shaft with a machine member
Accouplement à friction d'un arbre avec un élément de machine

(30) Priorität: 19.06.1992 DE 4219883
(43) Veröffentlichungstag der Anmeldung: 22.12.1993
(73) Patentinhaber: J.M. Voith GmbH, D-89522 Heidenheim (DE)
(72) Erfinder: Elsner, Ernst, W-7922 Herbrechtingen (DE)
(74) Vertreter: Weitzel, Wolfgang, Dr.-Ing. Patentanwalt

(56) Entgegenhaltungen:
- WO-A-84/04367
- DE-C- 3 640 631

## Beschreibung

Die Erfindung betrifft eine Kupplung, im einzelnen mit dem Merkmalen des Oberbegriffes aus Anspruch 1.

Eine gattungsgemäße Kupplung zum reibschlüssigen Verbinden einer Welle mit einem diese umschließenden Maschinenteil zur Übertragung hoher Drehmomente ist in der WO 84/04367 bekannt. Diese ist als Ringkupplung ausgeführt, die ein Gehäuse aufweist, das dort als separate in sich abgeschlossene Baugruppe mit einem vollständig umschlossenen Ringraum ausgebildet ist. In dem Ringraum ist ein axial verschiebbarer Kolben angeordnet, wobei eine Mantelfläche des Kolbens und/oder eine dieser Mantelfläche von Seiten des Gehäuses zugewandten Fläche konisch gestaltet sind. Die Mantelflächen des Kolbens und die den Ringraum definierenden Flächen wirken derart zusammen, daß bei axialer Verschiebung des Kolbens mindestens eine Wand dse Gehäuses durch radiale Aufweitung oder Zusammenziehung mit mindestens einem der beiden Bauteile - Welle oder Nabe - in Kontakt kommt. Zu diesem Zweck werden die beiden Druckkammern an den Stirnseiten des Ringraumes und des Kolbens von der einen Stirnseite her mit Druckmittel versorgt. Dazu dienen axial gerichtete Kanäle, von denen einer innerhalb der Wand der Ringkammer angeordnet ist und sich nahezu über die gasamte Länge der Ringkammer erstreckt. Im Bereich der Mantelflächen des Kolbens sind Schmiermittelnuten vorgesehen. Der Kolben selbst weist eine Bohrung auf, die die beiden Mantelflächen des Kolbens miteinander verbindet. Ölkanäle durch den Kolben führen die Hydraulikflüssigkeit zu den Flächenpaaren Kolben/Gehäuseinnenflächen. Die Bohrungen durch den Kolben erstrecken sich über dessen gesamte Länge. Man ist daher gezwungen, die Wandstärke des Kolbens mit Rücksicht auf Richtungsfehler beim Bohren verhältnismäßig stark auszuführen. Zur Vermeidung von Leckageverlusten zur drucklosen Seite des Kolbens ist eine Ventilanordnung im Bereich der Bohrungen durch den Kolben vorgesehen. Der durch diese Ventilanordnung erforderliche Bauraum ist bei der Auslegung des Kolbens ebenfalls zu berücksichtigen.

Eine Ausführungsform gemäß der Figur 3 dieser Veröffentlichung sieht vor, die Schmiermittelnuten spiralig und paarweise in der inneren und äußeren Mantelfläche des Kolbens anzuordnen. Dabei beginnt jede Nut eines Nutpaares am einen Kolbenende, und hört kurz vor dem anderen Kolbenende auf. Dies hat folgenden Sinn: wird das eine Ende des Kolbens (zum Zwecke des Spannens oder Lösens) unter den Druck des Mediums gesetzt, so gelangt eine Teilmenge des Mediums in die an diesem Ende beginnende Nut, jedoch nicht in den Druckraum am anderen Ende des Druckkolbens, so daß keine leitende Verbindung zwischen den Kolbenenden vorhanden ist und somit auch keine Leckage zwischen den Freiräumen an den beiden Kolbenenden stattfinden kann. Diese Anordnung soll verdoppelnuten, hat jedoch den Nachteil, daß jeweils nur eine Nut beim Spannungsvorgang oder beim Lösungsvorgang Schmiermittel führt, während die andere Nut frei von Schmiermittel ist und somit zur Schmierung nicht beiträgt. Dies bedeutet jedoch, daß zur Erzielung ausreichender Schmierung, die Gänge der Schmiermittelnuten entsprechend dicht nebeneinander angeordnet werden müssen. Damit wird die Herstellung verteuert.

Eine weitere Kupplung der eingangs genannten Art ist aus der GB-A-1 230 519 bekannt. Es handelt sich dabei um eine lösbare Spannzange, die aufgrund ihrer kegeligen Ausfbildung mittels eines Kolbens unter axiale Vorspannung gesetzt werden kann, um eine Welle schnell axial und gegen Drehung zu fixieren. Dabei soll sich die Fixierung auch rasch wieder lösen lassen. Die Berührungsfläche zwischen der Welle und der Stange einerseits und der diese unter Reibschluß umschließenden Muffe ist sehr kurz ausgebildet und dadurch hoch beansprucht. Diese Vorruichtung ist daher nicht zur Übertragung hoher Drehmomente geeignet. Insbesondere aber weist die Berührungsfläche zwischen der Spannmuffe und der zu fixierenden Stange einen großen kegeligen Spalt auf, was große Verformungsarbeit innerhalb der Spannvorrichtung erfordert. Der ringförmige Kolben steht unter axialer Federkraft, so daß in drucklosem Zustand zumindest eine vorläufige Fixierung der Stange oder Welle eintritt. Zum endgültigen Fixieren muß denoch Druckmedium zugeführt werden, was aber zu Dichtheitsproblemen zwischen dem inneren Druckraum und der Austrittsbohrung der Welle aus der Vorrichtung führen kann. Um eine andauernde Fixierung zwischen der Vorrichtung und der Welle bzw. Stange herbeizuführen, ist es daher notwendig, auch dauernd Medium unter hohen Druck zuzuführen.

Eine, das gleiche Grundprinzip verwirklichende weitere Ausführung einer Schnelllösekupplung ist aus der DE 36 40 631 C1 bekannt. Diese dient der drehfesten Verbindung zweier koaxialer Bauteile. Die Kupplung umfaßt vorzugsweise eine Innen- und eine Außenhülse, die einen kegeligen Ringraum umschließen und in welchem sich ebenfalls ein kegeliger Ringkolben durch ein Druckmittel in axialer Richtung verschieben läßt, wodurch eine radiale Spannkraft auf die zu verbindenden Bauteile ausgeübt wird. Dazu wird jeweils eine der beiden Druckkammern an den beiden Stirnseiten des Kolbens mit Druck beaufschlagt. Das Druckmittel wird zur hinteren Druckkammer durch einen Kanal geleitet, der im vorderen Bereich des Ringkolbens in den Ringraum mündet und von dort über Nuten in der äußeren Mantelfläche des Ringkolbens zur hinteren Druckkammer.

Von Kupplungen der eingangs genannten Gattung wird einerseits verlangt, daß die eigentliche Kupplungsarbeit - d.h. das Spannen und Lösen - zuverlässig funktioniert, zum anderen aber auch, daß die Schmierung der aneinandergleitenden Flächen des Kolbens und des Gehäuses stets ausreichend ist, damit der Kolben verschoben werden kann. Für beide Funktionen wird Drucköl eingesetzt. Zum Spannen bzw. Lösen der Kupplung ist die Ölmenge verhältnismäßig hoch, während der erforderliche Druck gegen null geht. Bezüglich des Schmiermittels liegen die Verhältnisse umgekehrt: Die erforderliche Menge an Schmiermitteln ist sehr gering, während der erforderliche Druck sehr hoch ist, damit das Schmiermittel durch die kapilarartigen Schmiermittelnuten hindurchgetrieben wird, und die beteiligten Flächen einwandfrei versorgt werden. Die erforderliche Hydraulikeinrichtung muß somit beiden Bedürfnissen genügen, d.h. sie muß Medium von verhältnismäßig hohem Druck als auch von verhältnismäßig großer Menge bereitstellen.

Der Erfindung liegt die Aufgabe zugrunde, eine Kupplung gemäß dem Oberbegriff von Anspruch 1 derart zu gestalten, daß die eigentliche Funktion sowie auch die Schmierung zuverlässig erfüllt werden; insbesondere soll die notwendige Hydraulik im Hinblick auf das Betreiben der Kupplung beim Spannen bzw. Lösen einerseits sowie im Hinblick auf das Schmieren andererseits optimal gestaltet werden; ferner soll die Kupplung kompakt und kostengünstig herstellbar sein.

Diese Aufgabe wird durch die kennzeichnenden Merkmale von Anspruch 1 gelöst.

Der Erfinder hat bei dieser Lösung eine Trennung der beiden Kreisläufe vollzogen, nämlich des Arbeitskreislaufes für das Spannen und Lösen der Kupplung einerseits sowie des Schmiermittelkreislaufes zum Versorgen der Schmiermittelnuten andererseits. Dies ist durch das Anordnen eines eigenen Schmiermittelanschlusses verwirklicht, der an einer Mantelfläche des Kolbens in den Spalt zwischen dieser Mantelfläche und der benachbarten, feststehenden Fläche einmündet. Ferner erstrecken sich die Schmiermittelnuten von der Schmiermittelmündung aus in axialer Richtung bis vor das betreffende Kolbenende, so daß keine leitende Verbindung zwischen den Bereichen jenseits der beiden Kolbenenden vorhanden ist. Schließlich ist jeweils nur eine einzige Nut vorgesehen, und keine Doppelnut, so wie beim Stande der Technik. Diese einzige Nut ist stets mit Schmiermittel ausgefüllt, womit eine optimale Ausnutzung gegeben ist.

Die beiden Mantelflächen des Kolbens können jeweils eine Aussparung aufweisen, die in axialer Richtung eine mehr oder minder große Erstreckung hat, am besten wenigstens gleich dem halben Kolbenhub. Der Schmiermittelanschluß mündet zweckmäßigerweise in diese Aussparung.

Dank der Trennung der beiden Kreisläufe, nämlich des Arbeitskreislaufes für die Kolbenbetätigung einerseits, und des Schmiermittelkreislaufes für dessen Schmierung läßt sich die zugehörende Hydraulik auf sehr rationelle Weise ausführen. Es lassen sich nämlich zwei Hydrauliksysteme einsetzen, die jeweils für den Bedarf des einen bzw. des anderen Kreislaufes maßgeschneidert sind. Gerade bei besonders großen Anlagen führt dies zu erheblichen wirtschaftlichen Vorteilen. Bei praktischen Anlagen muß der Druck des Schmiermittelkreislaufes 150 MPa (= Megapascal) betragen, während der Druck des Arbeitskreislaufes nur 30 MPa betragen muß.

Die Gestaltung der Schmiermittelnuten trägt zur Lösung der Aufgabe bei.

In weiterer Ausgestaltung der Erfindung werden die Aussparungen im Kolben in dessen beiden Mantelflächen vorgesehen, und erstrecken sich über einen erheblichen Teil der Kolbenlänge, vorzugsweise über wenigstens ein Drittel der Kolbenlänge. Durch diese Taillierung des Kolbens wird erreicht, daß die reibenden Flächen verkleinert werden, und damit die Reibung herabgesetzt wird. Hierdurch wird zur Lösung der Teilaufgabe beigetragen, die Hydraulik optimal zu gestalten; der Arbeitsdruck braucht nämlich wegen der verringerten Reibung nur sehr klein zu sein. Dies ist besonders bei langen Kolben von Bedeutung.

Die Erfindung ist anhand der Zeichnung näher erläutert. Darin ist im einzelnen folgendes dargestellt:
- Fig. 1: zeigt eine Kupplung in schematischer Darstellung, wobei alle Teile außer der Welle in einem Axialschnitt gezeigt sind.
- Fig. 2: zeigt eine alternative Ausführungsform des Anschlußteiles der Kupplung von Fig. 1.
- Fig. 3: zeigt eine Draufsicht auf die Mantelfläche des Kolbens in der Abwicklung.
- Fig. 4: zeigt eine Ansicht des Kolbens in einem Axialschnitt.
- Fig. 5: zeigt in vergrößerter Darstellung eine alternative Ausbildung eines Teiles des Gegenstandes von Fig. 1.

Die in den Figuren dargestellte Kupplung dient zum reibschlüssigen Verbinden einer Welle 1 mit einem nur andeutungsweise gezeigten Maschinenteil 2, im vorliegenden Falle einem Kalibrierring eines Walzwerks. Man erkennt ein Gehäuse 3, das im wesentlichen aus einer Buchse besteht, und das mit der Welle 1 eine Ringkammer 4 bildet. Das Gehäuse 3 weist eine zylindrische Außenfläche auf, gleich dem Maschinenteil 2. Maschinenteil 2 ist auf Gehäuse 3 aufgeschoben, so daß die Bohrungslaibung des Maschinenteils 2 satt an der äußeren Mantelfläche des Gehäuses 3 anliegt.

Gehäuse 3 bildet zusammen mit der Mantelfläche der Welle 1 eine Ringkammer 4. In dieser ist ein Kolben 5 angeordnet. Sowohl die innere Mantelfläche des Gehäuses 3 als auch die äußere Mantelfläche des Kolbens 5 sind leicht konisch. Der Kolben 5 ist in axialer Richtung unter dem Einfluß eines hydraulischen Druckmediums verschiebbar. Das Druckmedium ist über Anschlüsse 6 und 7 sowie über Leitungen 8 und 9 an einer Stelle in den Ringraum einleitbar, an der sich jeweils eine Stirnfläche des Kolbens 5 befindet. Im dargestellten Ausführungsbeispiel sind Druckanschluß 7 und Leitung 9 mit Druckmedium beaufschlagt, so daß der Kolben nach links verschoben wurde und damit in die Losposition. Wie man erkennt, ist das linke Kolbenende aufgrund der Konizität des Kolbens stärker als das rechte. Bei der genannten Verschiebebewegung von links nach rechts wird das Gehäuse aufgeweitet, und legt sich stramm an die Lochlaibung des Maschinenteiles 2 an, so daß eine reibschlüssige Verbindung hergestellt wird.

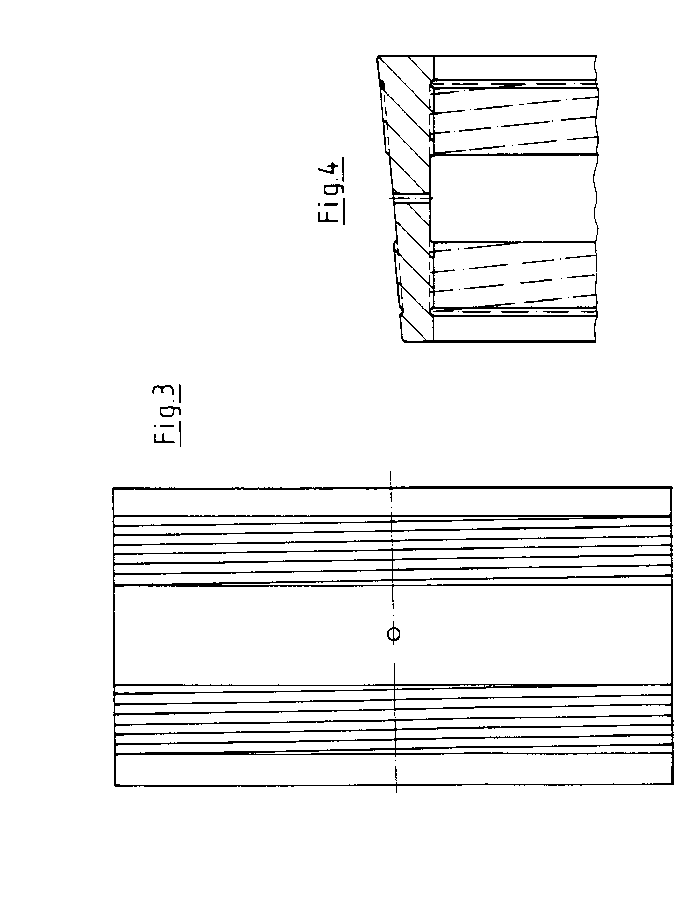

Um bei der vorhandenen hohen Radialbelastung eine leichte Axialbewegung des Kolbens 5 zu ermöglichen, wird ein Schmiermedium in die beteiligten Grenzflächen eingedrückt, und zwar zum einen zwischen die innere Mantelfläche des Kolbens 5 und die äußere Mantelfläche der Welle 1, und zum anderen zwischen äußerer Mantelfläche des Kolbens 5 und die innere Mantelfläche des Gehäuses 3. Zu diesem Zwecke ist ein weiterer Anschluß 10 mit einer Leitung 11 vorgesehen. Außerdem ist der Kolben 5 im mittleren Bereich seiner Längserstreckung mit taschenartigen Aussparungen 12, 13 versehen. Auf deren Bedeutung wird weiter unten noch eingegangen werden. In der Mitte seiner Längserstreckung weist der Kolben eine Anzahl von Bohrungen 14 auf, von denen nur eine gezeigt ist. Außerdem weist der Kolben auf seinen beiden Mantelflächen - d.h. innen und außen - Schmiermittelnuten auf - siehe die Figuren 3 und 4. Jede einzelne Nut beginnt irgendwo an einer der Aussparungen 12, 13 und läuft spiralig in axialer Richtung zum betreffenden Ende des Kolbens 5 hin, ohne jedoch dieses Ende zu erreichen. Sie hört kurz vor dem betreffenden Ende auf. Es steht somit keine leitende Verbindung zwischen der betreffenden Aussparung, z. B. 12 oder 13, und der Druckleitung, z. B. 8 oder 9. Demgemäß findet auch keine Leckage statt zwischen der Leitung 11 einerseits und der Leitung 8 bzw. 9 andererseits.

Schmiermittel wird somit über den Druckanschluß 10 in die Leitung 11 eingeleitet, gelangt sodann in die Aussparung 12, und fließt weiter durch die radial innere Nuten in axialer Richtung zu den beiden axialen Enden des Kolbens 5 hin. Es gelangt aber außerdem noch aufgrund der Bohrungen 14 zur Tasche 13, von wo aus es in die radial äußeren Spiralnuten zu den beiden Enden des Kolbens hinströmt.

Aufgrund der beiden Aussparungen 12, 13 ist die Reibfläche verkleinert und damit auch die Reibung zwischen Kolben einerseits und Welle 1 sowie Gehäuse 3 andererseits verringert.

Bei dieser Ausführungsform ist besonders interessant, daß der Kolben 5 unmittelbar auf der Welle 1 gleitet. Das Gehäuse 3 ist somit praktisch nur aus einem hülsenartigen Teil aufgebaut, wie oben erwähnt. Es wäre aber auch denkbar, das Gehäuse 3 derart zu gestalten, daß die Ringkammer 4 hiervon umschlossen ist. Dies würde bedeuten, daß das Gehäuse 3 nicht nur eine einzige (radial äußere) Hülse umfaßt, sondern auch noch eine radial innere Hülse, die sich zwischen dem Kolben 5 und der Welle 1 befinden würde. Auch bei einer solchen Ausführungsform läßt sich die Erfindung vorteilhaft anwenden.

Die Figuren 3 und 4 zeigen den Verlauf der Nuten. Jede Nut - innen wie außen - ist nur eingängig, im Gegensatz zum gattungsbildenden Stand der Technik, bei dem die Nuten zweigängig sind.

Der Axialschnitt des Kolbens gemäß Fig. 4 läßt die spiralig umlaufenden Schmiermittelnuten erkennen.

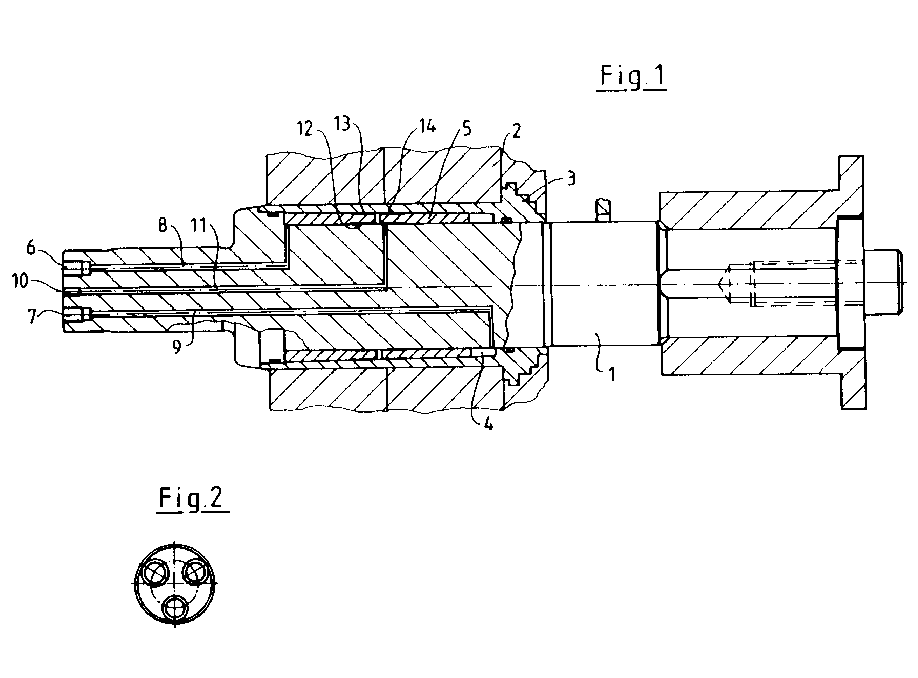

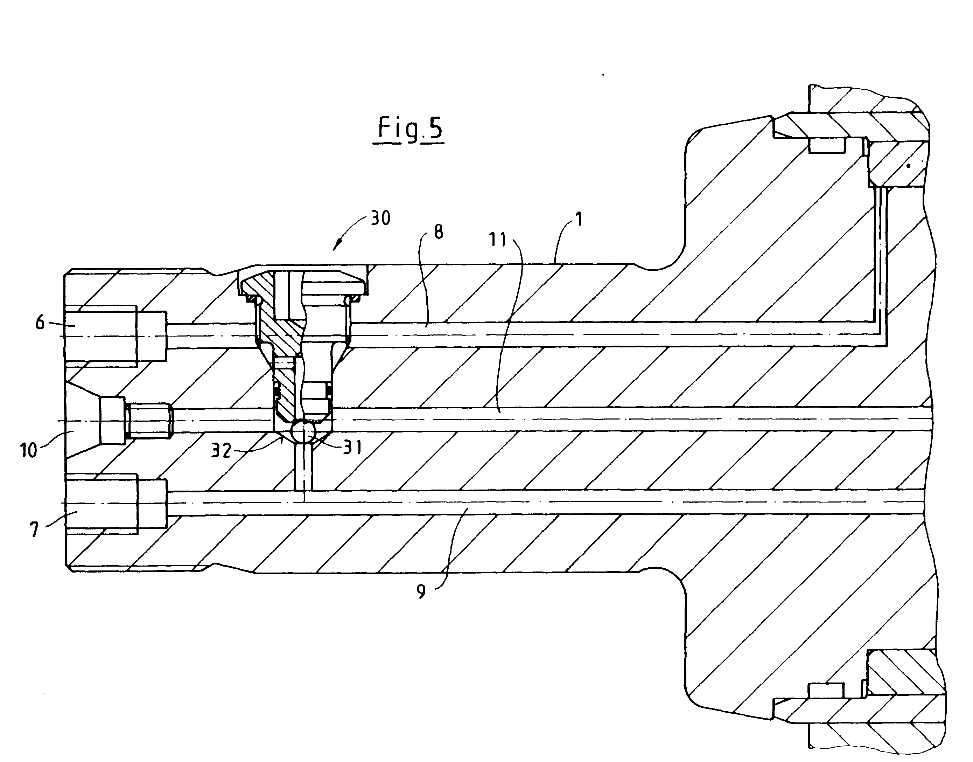

In Fig. 5 erkennt man eine besondere Ausbildung des Gegenstandes von Fig. 1. Im Wellenzapfen der Welle 1 ist nämlich ein Wechselventil 30 angeordnet. Dieses weist eine Ventilkugel 31 und einen Ventilsitz 32 auf. Dieses Ventil ist im einzelnen derart gestaltet, daß bei Beaufschlagung eines der beiden Druckanschlüsse 6, 7 mit Arbeitsmedium zwar stets ein Teil dieses Arbeitsmediums in die Leitung 11 gelangt, um die Schmiermittelnuten mit Schmiermittel zu versorgen, jedoch nicht in die betreffende Leitung des anderen Druckmittelanschlusses. Wird beispielsweise Druckmittelanschluß 6 mit Druckmittel beaufschlagt, so pflanzt sich der Druck zur Leitung 8 fort, desgleichen durch Wechselventil 30 zur Schmiermittelleitung 11. Es wird jedoch die Verbindung zur Leitung 9 durch die Ventilkugel 31 und den Ventilsitz 32 abgesperrt, so daß keine leitende Verbindung zwischen dem Druckmittelanschluß 6 einerseits und der Druckleitung 9 andererseits herrscht.

## Patentansprüche

1. Kupplung zum reibschlüssigen Verbinden einer Welle (1) mit einem diese umschließenden Maschinenteil (2), mit den folgenden Merkmalen:
1.1 ein Gehäuse (3), das eine Ringkammer (4) bildet;
1.2 ein in der Ringkammer axial verschiebbarer Kolben;
1.3 eine Mantelfläche des Kolbens (5) und/oder eine dieser zugewandte Fläche sind konisch gestaltet;
1.4 die Ringkammer (4) weist an ihren axialen Endbereichen Druckanschlüsse (6, 7) auf;
1.5 im Bereich der Mantelflächen des Kolbens sind Schmiermittelnuten vorgesehen;
1.6 der Kolben (5) weist eine Bohrung auf, die die beiden Mantelflächen des Kolbens miteinander verbindet;
gekennzeichnet durch die folgenden Merkmale:
1.7 es ist eine separate Schmiermittelzufuhrleitung (11) vorgesehen, die wenigstens in Einbaulage der Kupplung im Bereich einer Mantelfläche des Kolbens mündet;
1.8 die Schmiermittelnuten erstrecken sich von der Mündung der Schmiermittelzufuhrleitung (11) an der Grenzfläche zwischen der betreffenden Mantelfläche des Kolbens (5) und der angrenzenden Fläche bis kurz vor das betreffende Kolbenende;
1.9 es ist jeweils nur eine einfache Schmiermittelnut vorgesehen;
1.10 wenigstens eine der beiden Mantelflächen des Kolbens (5) weist eine Aussparung (12, 13) auf, die sich in axialer Richtung erstreckt.

2. Kupplung nach Anspruch 1, dadurch gekennzeichnet, daß wenigstens eine der beiden Mantelflächen des Kolbens (5) eine Aussparung (12, 13) aufweist, die sich wenigstens über den halben Kolbenhub in axialer Richtung erstreckt.

3. Kupplung nach Anspruch 2, dadurch gekennzeichnet, daß sich die Aussparung (12, 13) auf beiden Seiten des Kolbens (5) befinden, und sich über einen wesentlichen Teil von dessen Länge, vorzugsweise über ein Drittel der Kolbenlänge, hinwegstrecken.

4. Kupplung nach einem der Ansprüche 2 oder 3, dadurch gekennzeichnet, daß die Leitung (11) der Schmiermittelzufuhr (10) in der inneren Aussparung mündet.

5. Kupplung nach einem der Ansprüche 1 bis 4, dadurch gekennzeichnet, daß die Ringkammer (4) vom Gehäuse (3) gebildet wird.

6. Kupplung nach einem der Ansprüche 1 bis 4, dadurch gekennzeichnet, daß das Gehäuse (3) als Hülse ausgeführt ist und die Ringkammer (4) vom Gehäuse (3) und der Welle (1) gebildet wird, wobei sich die Schmiermittelzufuhrleitung durch die mit einem Maschinenteil (2) zu verbindende Welle (1) erstreckt.

7. Kupplung nach einem edr Ansprüche 1 bis 6, dadurch gekennzeichnet, daß den Druckmittelleitungen (8, 9) und der Schmiermittelzufuhrleitung (11) gemeinsam ein Wechselventil zugordnet ist.

## Claims

1. Coupling for frictionally connecting a shaft (1) with a machine part (2) surrounding the latter with the following features:
1.1 a housing (3) which forms an annular chamber (4);
1.2 a piston that is axially displaceable in the annular chamber;
1.3 a shell surface of the piston (5) and/or a surface facing the latter are conical;
1.4 the annular chamber (4) has pressure taps (6, 7) at its axial ends;
1.5 lubricant grooves are provided in the region of the shell surfaces of the piston;
1.6 the piston (5) has a bore which connects the two shell surfaces of the piston together;
characterised by the following features:
1.7 a separate lubricant supply line (11) is provided which enters at least in the installed position of the coupling in the region of a shell surface of the piston;
1.8 the lubricant grooves extend from the entry of the lubricant supply line (11) at the interface between the respective shell surface of the piston (5) and the adjoining surface almost up to the piston end in question;
1.9 only a simple lubricant groove is provided;
1.10 at least one of the two shell surfaces of the piston (5) has a recess (12, 13) which extends in axial direction.

2. Coupling according to claim 1, characterised in that at least one of the two shell surfaces of the piston (5) has a recess (12, 13) which extends over at least half the piston stroke in axial direction.

3. Coupling according to claim 2, characterised in that the recesses (12, 13) are located on both sides of the piston (5) and extend over an essential part of its length, preferably over a third of the piston length.

4. Coupling according to one of claims 2 or 3, characterised in that the line (11) of the lubricant supply (10) enters into the inner recess.

5. Coupling according to one of claims 1 to 4, characterised in that the annular chamber (4) is formed by the housing (3).

6. Coupling according to one of claims 1 to 4, characterised in that the housing (3) is designed as a sleeve and the annular chamber (4) is formed by the housing (3) and the shaft (1), whereby the lubricant supply line extends through the shaft (1) to be connected to a machine part (2).

7. Coupling according to one of claims 1 to 6, characterised in that a two-way valve is assigned jointly to the pressure means lines (8, 9) and the lubricant supply line (11).

## Revendications

1. Accouplement, permettant la liaison à friction d'un arbre (1) avec une partie de machine (2) entourant cet arbre, comportant les particularités suivantes :
1.1 un boîtier (3) formant une chambre annulaire (4) ;
1.2 un piston agencé de façon à pouvoir être déplacé axialement dans la chambre annulaire ;
1.3 une surface périphérique du piston (5) et/ou une surface faisant face à cette surface périphérique ont une forme conique ;
1.4 la chambre annulaire (4) comporte des raccords de pression (6, 7) à l'endroit de ses zones d'extrémité axiale ;
1.5 des rainures de lubrifiant sont prévues dans la zone des surfaces périphériques du piston ;
1.6 le piston (5) comporte un perçage qui fait communiquer l'une avec l'autre les deux surfaces périphériques du piston ;
caractérisé par les particularités suivantes :
1.7 il est prévu un conduit d'amenée de lubrifiant (11) séparé qui débouche, au moins dans la position montée de l'accouplement, dans la zone d'une surface périphérique du piston ;
1.8 les rainures de lubrifiant s'étendent du débouché du conduit d'amenée de lubrifiant (11) jusqu'à la surface limite entre la surface périphérique concernée du piston (5) et la surface adjacente, jusqu'à peu avant l'extrémité de piston concernée ;
1.9 il n'est dans chaque cas prévu qu'une rainure de lubrifiant simple ;
1.10 au moins l'une des deux surfaces périphériques du piston (5) comporte un évidement (12, 13) qui s'étend suivant la direction axiale.

2. Accouplement selon la revendication 1, caractérisé en ce qu'au moins l'une des deux surfaces périphériques du piston (5) comporte un évidement (12, 13) qui s'étend suivant la direction axiale au moins sur la moitié de la course du piston.

3. Accouplement selon la revendication 2, caractérisé en ce que des évidements (12, 13) sont prévus sur les deux côtés du piston (5) et s'étendent sur une partie importante de la longueur de ce dernier, de préférence sur un tiers de la longueur du piston.

4. Accouplement selon l'une des revendications 2 ou 3, caractérisé en ce que le conduit (11) de l'amenée de lubrifiant (10) débouche dans l'évidement intérieur.

5. Accouplement selon l'une des revendications 1 à 4, caractérisé en ce que la chambre annulaire (4) est formée par le boîtier (3),

6. Accouplement selon l'une des revendications 1 à 4, caractérisé en ce que le boîtier (3) est réalisé sous forme de manchon et la chambre annulaire (4) est formée par le boîtier (3) et l'arbre (1), le conduit d'amenée de lubrifiant s'étendant & travers l'arbre (1) à rendre solidaire d'une partie de machine (2).

7. Accouplement selon l'une des revendications 1 à 6, caractérisé en ce qu'une valve à voies alternées est associée en commun aux conduits d'agent de pression (8, 9) et au conduit d'amenée de lubrifiant (11).
